# DEMANDE DE BREVET EUROPEEN

(11) **EP 3 675 435 A1**
(43) Date de publication de la demande: **01.07.2020**
(21) Numéro de dépôt: 19220131.7
(22) Date de dépôt: 30.12.2019
(51) Int. Cl.: H04L 12/751, H04L 12/715, H04W 40/24

(54) **PROCÉDÉ DE ROUTAGE DYNAMIQUE DANS UN RÉSEAU D'OBJETS CONNECTÉS**

(30) Priorité: 31.12.2018 EP 18306904; 06.05.2019 FR 1904713
(71) Demandeur: Bull SAS, 78340 Les Clayes-sous-Bois (FR)
(72) Inventeur: DEMEILLIEZ, Bruno, 38380 Saint Laurent du Pont (FR); MENIGOT, Gilles, 38190 Froges (FR); CHABAANE, Wajih, 73000 Chambery (FR)
(74) Mandataire: A.P.I. Conseil

(57) **Abrégé**

Il est proposé un procédé de routage dynamique dans un réseau d'objets connectés comprenant au moins deux passerelles de connexion à au moins un réseau de transport de données. En particulier, le procédé permet à chaque passerelle de connexion d'un réseau d'objets connectés de connaître en temps réel l'évolution de son environnement et de sélectionner un chemin de transmission d'un message d'un objet connecté à une autre associé à un niveau de performance (de la transmission) optimal.

## Description

La présente invention concerne le domaine des objets connectés et, notamment, l'échange de données dans une infrastructure réseau comprenant des objets connectés. Elle concerne en particulier un procédé de routage dynamique dans un réseau d'objets connectés qui comprend plusieurs passerelles de connexion qui utilisent respectivement des interfaces de communication différentes.

### [Art antérieur]

L'internet des Objets (IdO), ou Internet of Things (loT) désigne l'ensemble des objets connectés à internet et est un domaine des Technologies de l'Information et de la Communication (ou TIC) en pleine expansion. En effet, l'IoT trouve des applications dans des domaines de plus en plus variés tels que, par exemple : la ville intelligente, les voitures autonomes, la domotique ou encore la gestion intelligente de la maison.

Les dispositifs électroniques concernés par ces applications sont appelés des objets connectés, en ce sens qu'ils interagissent au travers de sous-réseaux locaux pouvant être connectés à un réseau central à haut débit (un réseau de transport de données) comme, par exemple, l'Internet. Ces sous-réseaux peuvent non seulement être connectés à Internet mais ils peuvent aussi être interconnectés au sein d'un même réseau d'objets connectés. Dans tous les cas, des passerelles de connexion propres à chaque sous-réseau, assurent le routage des messages qui transitent d'une part, entre les différents objets connectés d'un réseau d'objets connectés et, d'autre part, entre les objets connectés de ce réseau d'objets connectés et un réseau de transport de données.

La capacité d'une passerelle de connexion à assurer le routage de messages entre des objets connectés appartenant respectivement à différents sous-réseaux impose à cette passerelle de relever plusieurs défis techniques. Tout d'abord, dans la mesure où l'infrastructure réseau formée par les différents sous-réseaux évolue en permanence, chaque passerelle de connexion doit pouvoir s'adapter à ces évolutions. En particulier, une passerelle de connexion doit pouvoir mettre à jour régulièrement les informations sur lesquelles elle s'appuie pour réaliser ses opérations de routage, et, en particulier, les informations qui permettent à la passerelle de connexion de savoir les différents chemins de transmission possibles pour transmettre un message d'un objet connecté source à un objet connecté destinataire. Cette capacité d'une passerelle de connexion à découvrir ou redécouvrir régulièrement son environnement au sein de l'infrastructure réseau est essentielle pour que chaque objet connecté du réseau puisse transmettre des messages à n'importe quel autre objet connecté du même réseau quelles que soient les évolutions de l'infrastructure réseau globale.

En outre, pour qu'une transmission se réalise de manière optimale, chaque passerelle de connexion doit aussi pouvoir sélectionner intelligemment le chemin de transmission le plus approprié pour transmettre un message lorsque plusieurs chemins de transmissions sont disponibles. Par « le plus approprié » on entend, par exemple, le chemin garantissant de choisir la transmission la plus stable possible ou la plus rapide possible.

Enfin, outre le fait que chaque sous-réseau s'appuie potentiellement sur une technologie qui lui est propre pour sa connectivité à un réseau de transport de données (par exemple via une Box ADSL, une BOX 4G, une connexion WiMax, une connexion Satellite ou un téléphone portable), chaque passerelle de connexion utilise aussi potentiellement une ou plusieurs interfaces de communication différentes. Typiquement, une passerelle de connexion d'un réseau d'objets connectés peut utiliser des interfaces Ethernet, des interfaces WIFI, des interfaces Bluetooth, des interfaces RF433 ou encore des interfaces IrDA. Ainsi, l'interconnexion entre différentes passerelles de connexion associées à différents sous-réseaux, suppose que chaque passerelle de connexion soit capable d'assurer ses fonctions de routage quelles que soient les différentes interfaces de communication utilisées par les différentes passerelles de connexion concernées.

La demande de brevet WO2018132323 divulgue une passerelle de connexion multimodale intelligente. Cette passerelle permet de résoudre des problèmes de connexion, de partage des ressources afin de minimiser ou d'éliminer les interruptions de transmission de données, et de latence. A cet effet, la passerelle de connexion comprend une plateforme intelligente « *fog computing* », qui comprend également une logique informatique « *fog* » qui facilite la création de réseaux incluant le fonctionnement des services de découverte automatique, de calcul, de stockage et de mise en réseau entre les terminaux et les centres de données, les interfaces de connectivité à une variété de réseaux, de périphériques et de ressources. En outre, la plateforme comprend une intelligence artificielle (IA) pour la prise de décision. Les règles de décision peuvent être configurées de manière dynamique et la passerelle intelligente peut se connecter à une autre passerelle. Ainsi, un maillage peut être établi entre des objets connectés dans une infrastructure réseau d'objets connecté comportant plusieurs passerelles de connexion à des réseaux de transports de données utilisant des interfaces de communication différentes. Toutefois, ce document ne divulgue pas un procédé permettant à une passerelle de connexion de découvrir régulièrement son environnement ni de sélectionner intelligemment un chemin de transmission entre un objet connecté qui lui est connecté et un autre objet connecté distant.

### [Problème technique]

L'invention a pour but de remédier aux inconvénients de l'art antérieur précités. En particulier, l'invention a pour but de proposer un procédé qui permet à la fois à chaque passerelle de connexion d'un réseau d'objets connectés de connaître en temps réel l'évolution de son environnement, c'est-à-dire de l'infrastructure réseau qu'elle forme avec d'autres passerelles de connexion d'un réseau d'objets connectés et de sélectionner le chemin de transmission d'un message d'un objet connecté à une autre associé à un niveau de performance (de la transmission) optimal. En outre, le procédé s'applique aussi lorsque le routage doit s'opérer entre passerelles de connexion utilisant des interfaces de communication différentes.

### [Brève description de l'invention]

A cet effet, un premier aspect de l'invention propose un procédé de routage dynamique dans un réseau d'objets connectés comprenant au moins deux passerelles de connexion à au moins un réseau de transport de données, lesdites passerelles de connexion supportant des interfaces de communication respectives, de préférence les interfaces de communication respectives utilisant des protocoles de communication différents, ledit procédé comprenant les étapes suivantes, exécutées par une première passerelle de connexion du réseau d'objets connectés :
- découverte de proche en proche de l'environnement de ladite première passerelle de connexion comprenant :
   - la diffusion d'une requête sur chaque interface de communication de ladite première passerelle de connexion ;
   - en réponse à la diffusion de la requête, la réception de messages de réponse en provenance d'objets connectés du réseau d'objets connectés, chaque message de réponse comprenant des informations d'identification respectivement associées à un ou plusieurs objets connectés déterminés dudit réseau ;
   - en réponse à la diffusion de la requête, en outre, la réception de messages de maillage en provenance d'au moins une seconde passerelle de connexion du réseau d'objets connectés, chaque message de maillage comprenant des informations d'identification et d'accessibilité respectivement associées à ladite seconde passerelle de connexion ;
et, lors de la réception par la première passerelle de connexion d'un message à transmettre d'un objet connecté source à un objet connecté destinataire appartenant tous deux au réseau d'objets connectés :
- la sélection dynamique d'un chemin de transmission du message à transmettre sur la base des informations d'identification associées aux objets connectés du réseau d'objets connectés et sur la base des informations d'identification et d'accessibilité associées aux secondes passerelles de connexion du réseau d'objets connectés.

Ce procédé est particulièrement utile dans un environnement comportant plusieurs passerelles de connexion entre objets connectés présentant des protocoles de communication hétérogènes et dont la disponibilité ou les caractéristiques de connectivités peuvent évoluer dans le temps. Ainsi, grâce à un tel procédé, il est possible de faire communiquer des objets en utilisant des protocoles de communications hétérogènes dont certains ne sont pas disponibles directement par l'objet connecté. Exemple un capteur (température, baromètre...) qui communique uniquement en RTL433 avec un ordinateur pourra être en communication avec un téléphone étant lui relié au réseau wifi en passant par une passerelle de type box wifi qui relie l'ordinateur et le téléphone. En particulier, la présente invention propose un mécanisme permettant à des objets connectés d'utiliser les différentes technologies de communication (wifi, réseau filaire, Bluetooth, IR...) des autres objets connectés avec lesquels ils sont connectés directement (latence=0) pour dialoguer avec les objets connectés qui sont connectés à ces premiers objets connectés et ainsi de suite. Cela permet donc de relier des objets connectés entre eux en mixant les technologies de communication.

De plus, de façon à assurer une transmission de message entre un objet connecté et un dispositif distant (comme un autre objet connecté) au sein d'un réseau de technologies de communication hétérogènes, il est souhaitable de pouvoir disposer d'un mécanisme de routage dynamique pouvant fournir, à l'objet connecté souhaitant envoyer un message, le chemin le plus efficace vers le dispositif destinataire et cela au travers de divers protocoles de communication.

Ainsi, un des intérêts de l'invention est de permettre à des objets utilisant des protocoles hétérogènes et qui de ce fait ne peuvent normalement pas dialoguer entre eux, de le faire. Le mécanisme permet d'identifier de façon unique les différents objets connectés présent dans le ou les sous réseau et de pouvoir router des messages malgré le fait que les objets connectés utilisent des protocoles de communications différents.

Dans un mode de mise en œuvre, l'étape de sélection dynamique d'un chemin de transmission du message à transmettre comprend le calcul d'un niveau de performance respectivement associé à chaque chemin de transmission accessible et la sélection, parmi les chemins de transmission accessibles, du chemin de transmission présentant le niveau de performance le plus élevé.

Dans un mode de mise en œuvre, le procédé comprend en outre l'envoi par la première passerelle de connexion du message à transmettre, à l'objet connecté destinataire, par le chemin de transmission sélectionné.

Dans un mode de mise en œuvre, les informations d'identifications associées à un objet connecté déterminé comprennent une ou plusieurs des informations suivantes :
- le type d'interface de communication supporté par la première passerelle de connexion pour la connexion avec ledit objet connecté ;
- le nom de l'interface de communication supportée par la première passerelle de connexion pour la connexion avec ledit objet connecté ;
- l'adresse dudit objet connecté sur l'interface de communication supportée par la première passerelle de connexion pour la connexion avec ledit objet connecté ;
- l'identifiant universel unique, UUID, dudit objet connecté ; et,
- une liste d'identifiants universels uniques d'autres objets connectés du réseau d'objets connectés avec lesquels ledit objet connecté possède une liaison de communication établie.

Dans un mode de mise en œuvre, les informations d'identification et d'accessibilité associées à une seconde passerelle de connexion déterminée comprennent une ou plusieurs des informations suivantes :
- le type d'interface de communication supportée par la première passerelle de connexion pour la connexion avec ladite seconde passerelle de connexion ;
- le nom de l'interface de communication supportée par la première passerelle de connexion pour la connexion avec ladite seconde passerelle de connexion ;
- l'adresse de ladite seconde passerelle de connexion sur l'interface de communication supportée par la première passerelle de connexion pour la connexion avec ladite seconde passerelle de connexion ; et
- une liste d'identifiants universels uniques, UUID, comprenant :
   - des UUID d'objets connectés distants directement connectés à ladite seconde passerelle de connexion ;
   - des UUID d'autres objets connectés distants avec lesquels les objets connectés directement connectés avec ladite seconde passerelle de connexion possède une liaison de communication établie ; et/ou
   - des identifiants universels uniques, UUID, d'autre passerelles de connexion du réseau d'objets connectés qui peuvent transmettre des messages par l'intermédiaire de ladite seconde passerelle de connexion.

Dans un mode de mise en œuvre, la liste d'identifiants universels uniques est obtenue par concaténation de tous les identifiants universels uniques compris dans ladite liste.

Dans un mode de mise en œuvre, les interfaces de communication utilisées par les passerelles de connexion comprennent des interfaces Ethernet, des interfaces WIFI, des interfaces Bluetooth, des interfaces RF433 ou des interfaces IrDA.

Dans un mode de mise en œuvre, les informations d'identifications associées à des objets connectés et les informations d'identifications et d'accessibilité associées à des secondes passerelles de connexion sont stockées dans une mémoire de la première passerelle de connexion, de préférence sous la forme de listes, et sont mises à jour à réception d'un message de réponse et/ou d'un message de maillage par ladite première passerelle de connexion.

Dans un mode de mise en œuvre, les informations d'identifications associées à des objets connectés et les informations d'identification et d'accessibilité associées à des secondes passerelles de connexion comprennent en outre une valeur représentative de la latence associée à une transmission de données de la première passerelle de connexion audit objet connecté ou à ladite seconde passerelle de connexion, respectivement.

Dans un mode de mise en œuvre, les informations d'identifications associées à des objets connectés et les informations d'identification et d'accessibilité associées à des secondes passerelles de connexion comprennent en outre une valeur représentative de la distance séparant la première passerelle de connexion dudit objet connecté ou de ladite seconde passerelle de connexion, respectivement.

Dans un mode de mise en œuvre, la valeur représentative de la distance séparant la première passerelle de connexion avec un objet connecté ou une seconde passerelle de connexion est déterminée, dans le cas d'un objet connecté, par le nombre de passerelles de connexion séparant la première passerelle et la passerelle de connexion directement connectée audit objet connecté, et, dans le cas d'une seconde passerelle de connexion, par le nombre de passerelles de connexion séparant la première passerelle et ladite seconde passerelle de connexion, respectivement.

Selon un deuxième aspect, l'invention porte sur une passerelle de connexion d'un réseau d'objets connectés, ledit réseau d'objets connectés comprenant au moins deux passerelles de connexion à au moins un réseau de transport de données, lesdites passerelles de connexion supportant des interfaces de communication respectives, ladite passerelle de connexion étant caractérisée en ce qu'elle comporte :
- un module de découverte configuré pour permettre à la passerelle de connexion la découverte de proche en proche de son environnement au sein du réseau d'objets connectés et comportant :
   - des moyens de diffusion d'une requête sur chaque interface de communication de la passerelle de connexion ; et,
   - des moyens de réception de messages en provenance d'objets connectés et/ou de passerelles de connexion du réseau d'objets connectés, lesdits messages comprenant des informations d'identifications associées à un ou plusieurs objets connectés déterminés ou des informations d'identifications et d'accessibilité associées à une ou plusieurs passerelles de connexion déterminées ;
- un module de sélection configuré pour sélectionner un chemin de transmission lorsque la passerelle de connexion reçoit un message à transmettre d'un objet connecté source à un objet connecté destinataire du réseau d'objets connectés, ladite sélection étant réalisée sur la base des informations récupérées par le module de découverte.

Selon un troisième aspect, l'invention porte sur un système de communication de données comprenant au moins un réseau de transport de données et un réseau d'objets connectés avec une pluralité de passerelles de connexion supportant des interfaces de communication respectives dans lequel les interfaces de communication respectives utilisant des protocoles de communication différents et chaque passerelle de connexion est configurée pour découvrir de proche en proche son environnement au sein du réseau d'objets connectés auquel elle appartient et pour sélectionner un chemin de transmission lorsqu'elle reçoit un message à transmettre d'un objet connecté source à un objet connecté destinataire sur la base d'informations associées aux objets connectés et aux passerelles de connexion de son environnement et comprend à cet effet :
- des moyens de diffusion d'une requête sur chacune de ses interfaces de communication ; et,
- des moyens de réception de messages en provenance d'objets connectés et/ou de passerelles de connexion du réseau d'objets connectés, lesdits messages comprenant des informations d'identifications associées à un ou plusieurs objets connectés déterminés ou des informations d'identifications et d'accessibilité associées à une ou plusieurs passerelles de connexion déterminées.

D'autres avantages et caractéristiques de l'invention apparaîtront à la lecture de la description suivante, donnée à titre d'exemple illustratif et non limitatif, en référence aux figures des dessins annexés dans lesquels :
**[****Fig. 1****]** est une représentation schématique d'un mode de réalisation d'un réseau d'objets connectés au sein duquel le procédé peut être mis en oeuvre ;
**[****Fig. 2****]** est un diagramme d'étapes d'un mode de mise en oeuvre du procédé ; et,
**[****Fig. 3****]** est un schéma fonctionnel d'un mode de réalisation d'une passerelle de connexion selon l'invention.

### [Description de l'invention]

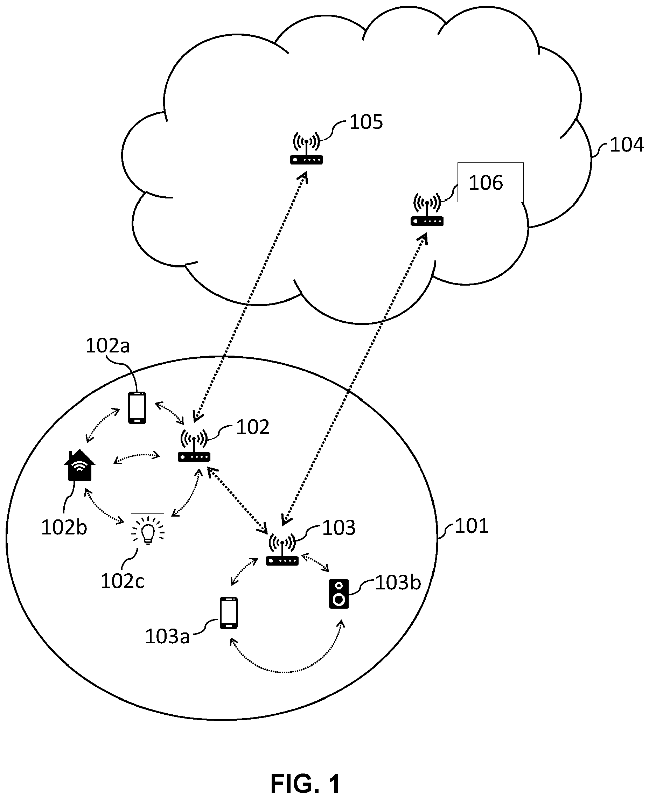

En référence au schéma de **la** **figure 1**, il va tout d'abord être décrit un mode de réalisation d'un réseau d'objets connectés dans lequel le procédé peut être mis en œuvre.

Dans la suite de la description, un « objet connecté » est un objet électronique connecté, par une connexion filaire ou sans fil, à un réseau de transport de données, de manière que l'objet connecté peut partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des appareils domotiques, des dispositifs d'éclairage intelligents, des enceintes connectées ou encore des smartphones.

On entend par « passerelle » ou « passerelle de connexion » au sens de l'invention un équipement assurant la connexion entre des équipements appartenant à des réseaux ou sous-réseaux locaux différents, par exemple assurant la connexion entre des équipements d'un réseau d'objets connectés (adresses IP locales) et des services internet (adresses IP publiques). De ce fait, une telle passerelle possède deux types d'adresses IP. Son adresse IP publique, attribuée par le FAI, lui permet d'échanger les données avec le réseau Internet. Son adresse IP locale lui permet d'échanger des données avec les équipements de son sous-réseau local. Elle est généralement spécifique et attribuée par défaut par le FAI.

L'expression « sous-réseau » ou « réseau local » au sens de l'invention correspond par exemple à des réseaux locaux servis chacun par au moins une passerelle de connexion à un autre réseau tel qu'Internet et auxquels sont connectés des objets connectés.

L'expression « protocoles de communication » au sens de l'invention correspond par exemple à des règles d'échanges de données entre différentes entités. Les protocoles de communication correspondent par exemple au wifi, réseau filaire, Bluetooth, Infra-rouge, Zigbee, LTE, 5G, et 3G.

Au sens de l'invention « message » ou « message à transmettre » correspond à un message envoyé entre des objets connectés au travers d'au moins une passerelle ou entre objet connecté et passerelle ou encore entre passerelles et comprenant des données pouvant inclure des informations relatives à leur état et à celui de leur environnement. Le format de ces données peut par exemple correspondre à des fichiers, à des flux média (vidéo, son) ou encore à des valeurs codées.

Au sens de l'invention « requête » ou « message de requête » correspond à un message envoyé entre deux objets connectés au travers d'au moins une passerelle et comprenant des données d'un objet connecté. Un message de requête peut comporter en outre un identifiant de la passerelle de réception sélectionnée, des paramètres de messages et éventuellement une plage horaire pour la transmission d'un message de réponse.

Au sens de l'invention « message de réponse » correspond à un message envoyé par un objet connecté, de préférence destinataire, à destination d'un autre objet connecté, de préférence source en réponse à une requête ou un message de requête émis par l'objet connecté source. Un message de réponse peut être stocké ou enregistré sur un moyen de stockage.

Au sens de l'invention « message de maillage » correspond à un message envoyé par des passerelles à destination d'une passerelle en lien avec l'objet connecté source en réponse à un message de requête émis par l'objet connecté source. Un message de maillage comprend de préférence des informations d'identification et d'accessibilité.

L'expression « chemin de transmission » désigne au sens de l'invention, l'ensemble des passerelles de connexion par lesquelles un message émis par un objet connecté source doit transiter, successivement, pour atteindre l'objet connecté destinataire.

Au sens de l'invention « liste» correspond à une pluralité de donnée permettant d'indiquer une information spécifique notamment en lien avec des informations d'identification et/ou d'accessibilité.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable. Un seul processeur ou plusieurs autres unités peuvent être utilisées pour mettre en oeuvre l'invention.

Dans l'exemple représenté à la figure 1, le réseau d'objets connectés 101 permet de connecter les différents objets connectés qu'il comprend au réseau de transport de données 104, par exemple à l'Internet, par l'intermédiaire de ses passerelles de connexion 102 et 103. En particulier, les passerelles de connexion 102 et 103 sont adaptées pour établir une connexion avec une passerelle de connexion du réseau de transport de données 104. Cette connexion peut, par exemple, utiliser une technologie filaire, comme la technologie Ethernet, ou une technologie sans fil, comme la technologie 4G ou la technologie WiMax. Dans l'exemple représenté, la passerelle de connexion 102 établit une liaison de communication avec la passerelle de connexion 105 alors que la passerelle de connexion 103 établit une liaison de communication avec la passerelle de connexion 106.

Chacune des deux passerelles de connexion 102 et 103 est directement connectée à une pluralité d'objets connectés du réseau d'objets connectés 101. En particulier, la passerelle de connexion 102 est directement connectée avec les objets connectés 102a, 102b et 102c et la passerelle de connexion 103 est directement connectée avec les objets connectés 103a et 103b. Par l'expression « directement connectée » on désigne la connexion à la passerelle de connexion de tout objet connecté sans que cette connexion passe par une entité intermédiaire, quelle qu'elle soit. En outre, l'homme du métier appréciera que les différents objets connectés qui sont directement connectés à une passerelle de connexion sont, de fait, également connectés entre eux via ladite passerelle de connexion. Enfin, chaque objet connecté est susceptible d'établir d'autres connexions, c'est-à-dire d'autres liaisons de communication, avec d'autres objets connectés qui ne sont pas directement connectés à la même passerelle de connexion. Dit autrement, un objet connecté peut alors être connecté à une passerelle de connexion sans être directement connecté à ladite passerelle. En effet, dans ce cas, il est connecté par l'intermédiaire de sa liaison de communication avec un objet connecté, lequel est quant à lui directement connecté à ladite passerelle de connexion.

De manière générale, dans des réseaux d'objets connectés, chaque passerelle de connexion utilise une ou plusieurs interfaces de communication qui lui sont propres pour communiquer avec les objets connectés qui lui sont directement connectés. Il peut s'agir, par exemple, d'une interface Ethernet, d'une interface WIFI, d'une interface Bluetooth, d'une interface RF433 ou encore d'une interface IrDA. Ces exemples ne sont pas limitatifs. L'homme du métier appréciera que les modes de réalisation ne sont limités par le nombre ni par le type ou la nature des interfaces de connexion qui sont supportées. Dans tous les cas, un avantage du procédé selon des modes de mise en œuvre repose notamment sur le fait que ledit procédé s'applique dans un réseau d'objets connectés comprenant plusieurs passerelles de connexion, lesquelles passerelles de connexion utilisent différentes interfaces de communication.

En résumé, les passerelles de connexion 102 et 103 du réseau d'objets connectés 101 assurent le routage de données, et en particulier de messages, entre les objets connectés qui leur sont connectés et le réseau de transport de données 104. En outre, ces passerelles de connexion sont aussi adaptées pour assurer le routage de messages, par leur intermédiaire, d'un objet connecté source qui leur est connecté, directement ou non, à un objet connecté destinataire qui est connecté à une autre passerelle de connexion du réseau d'objets connectés. Ainsi, dans l'exemple représenté à la figure 1, la passerelle de connexion 102 assure le routage des messages échangés avec le réseau de transport de données 104 et, le cas échéant, avec un objet connecté qui est connecté à la passerelle de connexion 103. Réciproquement, la passerelle de connexion 103 assure le routage des messages échangés avec le réseau de transport de données 104 et, le cas échéant, avec un objet connecté qui est connecté à la passerelle de connexion 102.

L'homme du métier appréciera que l'exemple décrit ci-dessus en référence à la figure 1 n'est pas limitatif. En particulier, des mises en œuvre du procédé peuvent s'appliquer à un réseau d'objet connecté comprenant au moins deux passerelles de connexion, qui permettent d'établir des liaisons de communication avec au moins un réseau de transport de données. Chaque passerelle de connexion peut être connectée, directement ou indirectement, avec un ou plusieurs objets connectés sans limite quant au nombre de passerelles intermédiaires par l'intermédiaire desquelles les messages sont routés jusqu'à un objet connecté destinataire.

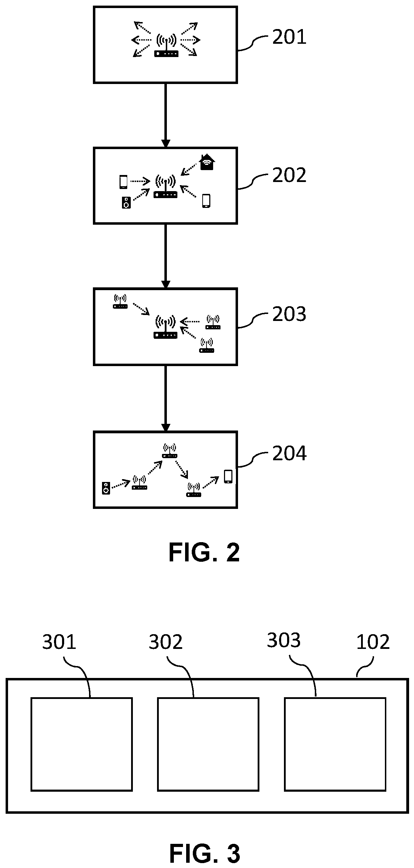

En référence à la **figure 2**, il va maintenant être décrit un diagramme d'étapes d'un mode de mise en œuvre du procédé. L'homme du métier appréciera que le procédé peut s'exécuter de manière continue, et ainsi permettre la gestion dynamique des paramètres de routage d'une passerelle de connexion. Un tel procédé dynamique permet, par exemple, de s'adapter en temps réel à l'ajout ou au retrait d'une nouvelle passerelle de connexion au sein du réseau d'objets connectés. En outre, un tel procédé dynamique permet, par exemple, de sélectionner un chemin de transmission optimal entre un objet connecté et un autre objet connecté.

La première étape du procédé permet, pour une passerelle de connexion du réseau d'objets connectés à découvrir, de proche en proche, son environnement. Le terme « environnement » désigne ici les différentes entités qui sont comprises dans le réseau, objets connectés ou passerelles, à une distance plus ou moins importante de la passerelle de connexion en question. En outre, l'homme du métier appréciera que, dans la pratique, chaque passerelle de connexion du réseau d'objets connectés peut exécuter le procédé en parallèle et ainsi découvrir ou maintenir à jour la connaissance de son environnement régulièrement.

Cette première étape comprend une première sous-étape 201 au cours de laquelle la passerelle de connexion en question émet une requête de diffusion, dite « requête broadcast », sur toutes ses interfaces de communication. De la sorte, la requête est diffusée vers toutes les entités auxquelles la passerelle de connexion est connectée, et ce quelle que soit l'interface par laquelle cette connexion est réalisée. En pratique, une telle requête broadcast présente à cet effet des paramètres déterminés (liées à un port, à un canal, à un contenu...) pour chacune des interfaces de communication concernées.

En réponse à cette requête broadcast, lors de la deuxième sous-étape 202, la passerelle de connexion reçoit des messages de réponse, en provenance des objets connectés qui ont reçu la requête broadcast. Chaque message de réponse ainsi retourné à la passerelle comprend des informations d'identification spécifiquement associées à l'objet connecté dont il provient. En particulier, les informations d'identification associées à un objet connecté déterminé ayant envoyé une réponse peuvent être, par exemple :
- le type d'interface de communication supporté par la première passerelle de connexion pour la connexion avec l'objet connecté concerné ;
- le nom de l'interface de communication supporté par la première passerelle de connexion pour la connexion avec l'objet connecté concerné ;
- l'adresse de l'objet connecté concerné sur l'interface de communication supportée par la première passerelle de connexion ;
- l'identifiant universel unique UUID (de l'anglais « *Universal Unique Identifier* »), de l'objet connecté concerné ; et/ou,
- une liste d'identifiants universels uniques d'autres objets connectés du réseau d'objet connecté, avec lesquels l'objet connecté concerné possède une liaison de communication établie.

De façon connue en soi par l'homme du métier, un UUID est un identifiant unique attribué à un objet connecté qui est généré par le fabriquant dudit objet connecté. La liste d'identifiants universels uniques comprend donc des UUID d'objets connectés auxquels l'objet connecté qui a répondu à la requête broadcast peut accéder.

En réponse également à la requête broadcast, lors de la troisième sous-étape 203, la passerelle de connexion reçoit des messages de maillage, en provenance d'autres passerelles de connexion du réseau d'objets connectés qui ont reçu la requête broadcast. Chaque message de maillage ainsi retourné à la passerelle de connexion, comprend des informations d'identification et d'accessibilité spécifiquement associées à la passerelle de connexion dont il provient. En particulier, les informations d'identifications et d'accessibilité associées à une passerelle de connexion déterminée ayant envoyé une réponse peuvent être, par exemple :
- le type d'interface de communication supportée par la passerelle de connexion qui reçoit le message pour la connexion avec la passerelle de connexion qui a émis le message ;
- le nom de l'interface de communication supportée par la passerelle de connexion qui reçoit le message pour la connexion avec la passerelle de connexion qui a émis le message ;
- l'adresse de la passerelle de connexion qui a émis le message sur l'interface de communication supportée par la passerelle de connexion qui reçoit le message ;
- une liste d'UUID qui comprend par exemple :
   - les UUIDs d'objets connectés dits distants qui sont directement connectés à la passerelle de connexion concernée ;
   - les UUIDs d'autres objets connectés distants avec lesquels les objets connectés directement connectés avec ladite seconde passerelle de connexion possède une liaison de communication établie ; et/ou,
   - les UUIDs, d'autres passerelles de connexion du réseau d'objets connectés qui peuvent transmettre des messages par l'intermédiaire de la passerelle de connexion concernée.

Dans un mode de mise en œuvre particulier du procédé, cette liste d'UUID peut être obtenue par une concaténation de toutes les données qu'elle contient, c'est-à-dire de tous les identifiants universels uniques qui sont compris dans ladite liste. Avantageusement, une telle concaténation permet de limiter la quantité de données transmises. En outre, s'agissant des UUIDs des passerelles de connexion qui peuvent transmettre des messages par l'intermédiaire de la passerelle de connexion concernée, ces UUIDs permettent de former le maillage c'est-à-dire de relier entres elles plusieurs passerelles de connexion. Les passerelles ainsi maillées peuvent ensuite transférer un message d'un objet connecté directement connecté à une passerelle de connexion vers un objet connecté directement connecté à une autre passerelle de connexion du maillage.

Dans un mode de mise en œuvre particulier du procédé, les informations d'identification associées à des objets connectés et les informations d'identification et d'accessibilité associées à des secondes passerelles de connexion sont stockées dans une mémoire de chaque passerelle de connexion. Par exemple ces informations peuvent être stockées sous la forme d'une ou de plusieurs listes, lesquelles listes pouvent par exemple être régulièrement mises à jour, notamment à réception d'un message de réponse et/ou d'un message de maillage par la passerelle de connexion en question. Par exemple, une telle mise à jour a lieu à chaque réception d'un message de réponse, ce qui est la solution la plus simple. Avantageusement, de telles listes regroupent toutes les informations à utiliser par la passerelle de connexion pour lui permettre d'assurer sa fonction, c'est-à-dire de réaliser les opérations de routage des messages. L'aspect dynamique du procédé découle alors de cette mise à jour régulière. Ainsi, à chaque itération du procédé, une liste stockée dans une mémoire de la passerelle de connexion peut intégrer, notamment, de nouveaux identifiants associés à de nouveaux objets connectés ou à de nouvelles passerelles de connexion qui ont répondu à la requête broadcast.

Additionnellement, dans un mode de mise en œuvre particulier du procédé, un objet connecté ou une passerelle de connexion peuvent être supprimés d'une liste mémorisée par une passerelle de connexion déterminée dès lors que leur UUID n'a été reçu dans aucun message (de réponse ou de maillage) par ladite passerelle pendant une durée supérieure à une valeur seuil déterminée, ou lorsqu'un nombre déterminé d'itérations successives du procédé a été exécuté sans que le UUID correspondant ne soit retourné à ladite passerelle de connexion déterminée.

L'étape 204 est ensuite exécutée, par exemple, à chaque réception par la passerelle de connexion d'un message à transmettre d'un objet connecté source vers un objet connecté destinataire qui appartiennent tous deux au réseau d'objets connectés. Plus particulièrement, cette étape comprend la sélection dynamique d'un chemin de transmission du message à transmettre sur la base des informations d'identification associées aux objets connectés du réseau d'objets connectés et sur la base des informations d'identification et d'accessibilité associées aux secondes passerelles de connexion du réseau d'objets connectés.

En particulier, cette sélection peut par exemple reposer sur un calcul d'un niveau de performance respectivement associé à chaque chemin de transmission accessible en choisissant le chemin de transmission qui présente le niveau de performance le plus élevé. Dans des modes de réalisation particulier, un tel niveau de performance peut, par exemple, être déterminé à partir d'une valeur de latence associée à un chemin de transmission donné et/ou d'une distance connue entre l'objet connecté source et l'objet connecté destinataire. Plus la latence est faible, et/ou plus le chemin est court, et meilleur est le niveau de performance associé.

En pratique, dans un mode de mise en œuvre du procédé, les informations d'identification associées à des objets connectés et les informations d'identification et d'accessibilité associées à des passerelles de connexion peuvent comprendre une valeur représentative de la latence associée à la transmission de données de la passerelle de connexion qui reçoit le message, vers ledit objet connecté ou vers ladite seconde passerelle de connexion, respectivement. Ainsi, avantageusement, à chaque réception d'un message, une passerelle de connexion peut aussi connaître, et le cas échéant mémoriser, une valeur représentative de la latence associée à la transmission de donnée jusqu'à l'entité concernée. Les informations ainsi accumulées peuvent ensuite être utilisées pour effectuer le routage de messages suivants.

Dans un autre mode de mise en œuvre du procédé, les informations d'identification associées à des objets connectés et les informations d'identification et d'accessibilité associées à des passerelles de connexion peuvent aussi comprendre une valeur représentative de la distance qui sépare la passerelle de connexion qui reçoit le message de l'objet connecté ou de la passerelle de connexion, respectivement. Une telle valeur peut, par exemple, correspondre au nombre de passerelles de connexion qui séparent la passerelle de connexion qui reçoit le message de la passerelle de connexion ou de l'objet connecté qui l'a émis. En outre, si un objet connecté est connu par une passerelle de connexion (c'est-à-dire que son identifiant est mémorisé dans une liste stockée par ladite passerelle) sans avoir lui-même répondu à une requête broadcast, la distance qui lui est associée peut-être égale à la distance de la passerelle de connexion avec laquelle il est directement connecté, incrémentée d'une unité.

L'homme du métier appréciera que la latence ou la distance sont seulement des exemples non-limitatifs de critères à partir desquels un niveau de performance déterminé peut être associé à un chemin de transmission déterminé. D'autres critères tel que, par exemple, la stabilité d'une connexion ou la qualité de la transmission (exprimée par exemple sous la forme d'un taux d'erreur sur les bits), pourront être utilisés pour déterminer un tel niveau de performance, à la place ou en complément de ces exemples. En effet, ces différents critères peuvent être utilisés de manière cumulative. Avantageusement, il est ainsi possible de sélectionner le chemin de transmission garantissant la transmission la plus rapide et/ou la plus fiable d'un message entre un objet connecté source et un objet connecté destinataire.

Dans un mode de mise en œuvre particulier du procédé, les différents chemins de transmission accessibles pour transmettre un message à un objet connecté destinataire peuvent aussi être stockés dans une mémoire d'une passerelle de connexion. En outre, il est ainsi possible, pour un objet connecté donné, de ne stocker en mémoire que le chemin de transmission associé au niveau de performance le plus élevé.

Enfin, dans un autre mode de mise en œuvre, le procédé comprend aussi une étape d'envoi du message à transmettre. Concrètement, un objet connecté émet une requête vers une passerelle de connexion déterminée pour envoyer un message à un autre objet connecté dont il connait un identifiant. Cette passerelle de connexion utilise ensuite le chemin de transmission sélectionné pour transmettre ledit message.

En référence à la **figure 3**, il va maintenant être décrit un schéma fonctionnel illustrant un mode de réalisation d'une passerelle de connexion selon un autre aspect de l'invention. La passerelle est particulièrement adaptée pour effectuer la mise en œuvre du procédé qui a été décrit dans ce qui précède. Dans l'exemple représenté, la passerelle de connexion 102 comporte ainsi un module de découverte 301 et un module de sélection 302.

Le module de découverte 301 est avantageusement configuré pour permettre à la passerelle de connexion 102 la découverte de proche en proche de son environnement au sein du réseau d'objets connectés auquel elle appartient. En particulier, le module de découverte 301 peut comporter des moyens de diffusion d'une requête sur chaque interface de communication de la passerelle de connexion ainsi que des moyens de réception de messages en provenance d'autres entités du réseau d'objets connectés. Ces moyens peuvent être des combinaisons de processeurs, mémoire vive, mémoire morte, mémoire cache, ainsi que les codes (logiciels) supportant des instructions pour opérer ces éléments matériels.

Le module de sélection 302 est quant à lui configuré pour sélectionner un chemin de transmission lorsque la passerelle de connexion 102 reçoit un message à transmettre d'un objet connecté source à un objet connecté destinataire appartenant tous deux au réseau d'objets connectés. En particulier, le module de sélection 302 est configuré pour sélectionner un tel chemin de transmission sur la base de toutes les informations récupérées par le module de découverte 301.

En outre, les informations récupérées par le module de découverte 301 peuvent être mémorisée par un module de mémorisation 303. Pour cela, le module de mémorisation peut comprendre n'importe quel support lisible connu dans l'art comprenant, par exemple, une mémoire volatile, telle qu'une mémoire vive statique (SRAM) et une mémoire vive dynamique (DRAM), et/ou une mémoire non volatile, telle que mémoire morte, mémoires flash, disques durs, disques optiques et bandes magnétiques ou sous la forme d'une mémoire volatile, telle qu'une mémoire vive (RAM) et/ou une mémoire cache.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Comme cela a été décrit, la présente invention propose des solutions permettant un routage optimisé, en ce sens que chaque passerelle de connexion peut sélectionner intelligemment le chemin de transmission le plus approprié pour transmettre un message lorsque plusieurs chemins de transmissions sont disponibles. A cet effet, l'invention permet à la fois à chaque passerelle de connexion d'un réseau d'objets connectés de connaître en temps réel l'évolution de son environnement, c'est-à-dire de l'infrastructure réseau qu'elle forme avec d'autres passerelles de connexion d'un réseau d'objets connectés et de sélectionner le chemin de transmission d'un message d'un objet connecté à une autre associé à un niveau de performance (de la transmission) optimal, et ce même lorsque le routage doit s'opérer entre passerelles de connexion utilisant des interfaces de communication différentes.

## Revendications

1. Procédé de routage dynamique dans un réseau d'objets connectés (101) comprenant au moins deux passerelles de connexion (102, 103) à au moins un réseau de transport de données (104), lesdites passerelles de connexion supportant des interfaces de communication respectives, les interfaces de communication respectives utilisant des protocoles de communication différents, ledit procédé comprenant les étapes suivantes, exécutées par une première passerelle de connexion (102, 103) du réseau d'objets connectés :
- découverte de proche en proche de l'environnement de ladite première passerelle de connexion comprenant :
---- la diffusion (201) d'une requête sur chaque interface de communication de ladite première passerelle de connexion ;
---- en réponse à la diffusion de la requête, la réception (202) de messages de réponse en provenance d'objets connectés du réseau d'objets connectés, chaque message de réponse comprenant des informations d'identification respectivement associées à un ou plusieurs objets connectés déterminés dudit réseau ;
---- en réponse à la diffusion de la requête, en outre, la réception (203) de messages de maillage en provenance d'au moins une seconde passerelle de connexion (103, 102) du réseau d'objets connectés, chaque message de maillage comprenant des informations d'identification et d'accessibilité respectivement associées à ladite seconde passerelle de connexion ;
et, lors de la réception par la première passerelle de connexion d'un message à transmettre d'un objet connecté source à un objet connecté destinataire appartenant tous deux au réseau d'objets connectés :
- la sélection dynamique (204) d'un chemin de transmission du message à transmettre sur la base des informations d'identification associées aux objets connectés du réseau d'objets connectés et sur la base des informations d'identification et d'accessibilité associées aux secondes passerelles de connexion du réseau d'objets connectés.

2. Procédé de routage dynamique selon la revendication 1 dans lequel l'étape de sélection dynamique d'un chemin de transmission du message à transmettre comprend le calcul d'un niveau de performance respectivement associé à chaque chemin de transmission accessible et la sélection, parmi les chemins de transmission accessibles, du chemin de transmission présentant le niveau de performance le plus élevé.

3. Procédé de routage dynamique selon la revendication 1 ou la revendication 2 comprenant en outre l'envoi par la première passerelle de connexion du message à transmettre, à l'objet connecté destinataire, par le chemin de transmission sélectionné.

4. Procédé de routage dynamique selon l'une quelconque des revendications 1 à 3, dans lequel les informations d'identifications associées à un objet connecté déterminé comprennent une ou plusieurs des informations suivantes :
- le type d'interface de communication supporté par la première passerelle de connexion pour la connexion avec ledit objet connecté ;
- le nom de l'interface de communication supportée par la première passerelle de connexion pour la connexion avec ledit objet connecté ;
- l'adresse dudit objet connecté sur l'interface de communication supportée par la première passerelle de connexion pour la connexion avec ledit objet connecté ;
- l'identifiant universel unique, UUID, dudit objet connecté ; et,
- une liste d'identifiants universels uniques d'autres objets connectés du réseau d'objets connectés avec lesquels ledit objet connecté possède une liaison de communication établie.

5. Procédé selon l'une quelconque des revendications 1 à 4, dans lequel les informations d'identification et d'accessibilité associées à une seconde passerelle de connexion déterminée comprennent une ou plusieurs des informations suivantes :
- le type d'interface de communication supportée par la première passerelle de connexion pour la connexion avec ladite seconde passerelle de connexion ;
- le nom de l'interface de communication supportée par la première passerelle de connexion pour la connexion avec ladite seconde passerelle de connexion ;
- l'adresse de ladite seconde passerelle de connexion sur l'interface de communication supportée par la première passerelle de connexion pour la connexion avec ladite seconde passerelle de connexion ; et
- une liste d'identifiants universels uniques, UUID, comprenant :
---- des UUID d'objets connectés distants directement connectés à ladite seconde passerelle de connexion ;
---- des UUID d'autres objets connectés distants avec lesquels les objets connectés directement connectés avec ladite seconde passerelle de connexion possède une liaison de communication établie ; et/ou
---- des identifiants universels uniques, UUID, d'autre passerelles de connexion du réseau d'objets connectés qui peuvent transmettre des messages par l'intermédiaire de ladite seconde passerelle de connexion.

6. Procédé selon la revendication 5, dans lequel la liste d'identifiants universels uniques est obtenue par concaténation de tous les identifiants universels uniques compris dans ladite liste.

7. Procédé selon l'une quelconque des revendications 1 à 6, dans lequel les interfaces de communication utilisées par les passerelles de connexion comprennent des interfaces Ethernet, des interfaces WIFI, des interfaces Bluetooth, des interfaces RF433 ou des interfaces IrDA.

8. Procédé selon l'une quelconque des revendications 1 à 7, dans lequel les informations d'identifications associées à des objets connectés et les informations d'identifications et d'accessibilité associées à des secondes passerelles de connexion sont stockées dans une mémoire de la première passerelle de connexion, de préférence sous la forme de listes, et sont mises à jour à réception d'un message de réponse et/ou d'un message de maillage par ladite première passerelle de connexion.

9. Procédé selon l'une quelconque des revendications 1 à 8, dans lequel les informations d'identifications associées à des objets connectés et les informations d'identification et d'accessibilité associées à des secondes passerelles de connexion comprennent en outre une valeur représentative de la latence associée à une transmission de données de la première passerelle de connexion audit objet connecté ou à ladite seconde passerelle de connexion, respectivement.

10. Procédé selon l'une quelconque des revendications 1 à 9, dans lequel les informations d'identifications associées à des objets connectés et les informations d'identification et d'accessibilité associées à des secondes passerelles de connexion comprennent en outre une valeur représentative de la distance séparant la première passerelle de connexion dudit objet connecté ou de ladite seconde passerelle de connexion, respectivement.

11. Procédé selon la revendication 7, dans lequel la valeur représentative de la distance séparant la première passerelle de connexion avec un objet connecté ou une seconde passerelle de connexion est déterminée, dans le cas d'un objet connecté, par le nombre de passerelles de connexion séparant la première passerelle et la passerelle de connexion directement connectée audit objet connecté, et, dans le cas d'une seconde passerelle de connexion, par le nombre de passerelles de connexion séparant la première passerelle et ladite seconde passerelle de connexion, respectivement.

12. Passerelle de connexion d'un réseau d'objets connectés, ledit réseau d'objets connectés comprenant au moins deux passerelles de connexion à au moins un réseau de transport de données, lesdites passerelles de connexion supportant des interfaces de communication respectives, ladite passerelle de connexion étant **caractérisée en ce qu'**elle comporte :
- un module de découverte configuré pour permettre à la passerelle de connexion la découverte de proche en proche de son environnement au sein du réseau d'objets connectés et comportant :
---- des moyens de diffusion d'une requête sur chaque interface de communication de la passerelle de connexion ; et,
---- des moyens de réception de messages en provenance d'objets connectés et/ou de passerelles de connexion du réseau d'objets connectés, lesdits messages comprenant des informations d'identifications associées à un ou plusieurs objets connectés déterminés ou des informations d'identifications et d'accessibilité associées à une ou plusieurs passerelles de connexion déterminées ;
- un module de sélection configuré pour sélectionner un chemin de transmission lorsque la passerelle de connexion reçoit un message à transmettre d'un objet connecté source à un objet connecté destinataire du réseau d'objets connectés, ladite sélection étant réalisée sur la base des informations récupérées par le module de découverte.

13. Système de communication de données comprenant au moins un réseau de transport de données et un réseau d'objets connectés avec une pluralité de passerelles de connexion supportant des interfaces de communication respectives dans lequel les interfaces de communication respectives utilisent des protocoles de communication différents et chaque passerelle de connexion est configurée pour découvrir de proche en proche son environnement au sein du réseau d'objets connectés auquel elle appartient et pour sélectionner un chemin de transmission lorsqu'elle reçoit un message à transmettre d'un objet connecté source à un objet connecté destinataire sur la base d'informations associées aux objets connectés et aux passerelles de connexion de son environnement et comprend à cet effet :
---- des moyens de diffusion d'une requête sur chacune de ses interfaces de communication ; et,
---- des moyens de réception de messages en provenance d'objets connectés et/ou de passerelles de connexion du réseau d'objets connectés, lesdits messages comprenant des informations d'identifications associées à un ou plusieurs objets connectés déterminés ou des informations d'identifications et d'accessibilité associées à une ou plusieurs passerelles de connexion déterminées.
